# FASCICULE DE BREVET EUROPEEN

(11) **EP 3 283 345 B1**
(45) Date de publication et mention de la délivrance du brevet: **05.07.2023**
(21) Numéro de dépôt: 16723409.5
(22) Date de dépôt: 12.04.2016
(51) Int. Cl.: B60W 30/182, B60W 50/08

(54) **PROCEDE ET SYSTEME DE GESTION D'UN CHANGEMENT DE MODE DE CONDUITE D'UN VEHICULE AUTOMOBILE**
VERFAHREN UND SYSTEM ZUR VERWALTUNG DES WECHSELS EINES FAHRMODUS EINES KRAFTFAHRZEUGES
METHOD AND SYSTEM FOR MANAGING A CHANGE OF MODE OF DRIVING OF AN AUTOMOTIVE VEHICLE

(30) Priorité: 16.04.2015 FR 1553405
(43) Date de publication de la demande: 21.02.2018
(73) Titulaire: Renault s.a.s, 92100 Boulogne Billancourt (FR)
(72) Inventeur: MOUTON, Xavier, 78280 Guyancourt (FR); JAMOND, Catherine, 78720 Senlisse (FR); LE NINDRE, Bénédicte, 78117 Chateaufort (FR)
(74) Mandataire: Renault Group
(86) Numéro de dépôt international: PCT/FR2016/050842
(87) Numéro de publication internationale: WO 2016/166464

(56) Documents cités:
- EP-A1- 2 397 385
- EP-A2- 2 233 388
- EP-B1- 2 233 388
- GB-A- 2 492 655
- US-A1- 2013 294 619

## Description

La présente invention concerne un procédé de gestion d'un changement de mode de conduite d'un véhicule automobile et un système pour la mise en oeuvre d'un tel procédé.

L'invention concerne aussi un programme d'ordinateur ainsi qu'un véhicule automobile comprenant un tel système de gestion d'un changement de mode de conduite.

Dans l'état de l'art, les systèmes de gestion d'un changement de mode de conduite comprennent généralement un dispositif de sélection d'un mode de conduite et des dispositifs de contrôle de la dynamique du véhicule comme par exemple des systèmes de gestion d'une boîte de vitesse, de gestion des suspensions ou encore de gestion du moteur du véhicule. Ces systèmes de gestion du changement de mode de conduite visent à donner au conducteur la possibilité de changer le caractère du véhicule.

On connaît aussi le document US2013/0294619A1 qui décrit un système de contrôle reproduisant l'ambiance sonore d'une transmission à engrenages fixes dans le cas d'un véhicule muni d'une transmission CVT, ainsi que le document GB2492655A qui décrit un mode de contrôle automatique d'un sous-système lié au pilotage dynamique d'un véhicule en fonction du terrain.

Dans ces systèmes, le dispositif de sélection est apte à faire fonctionner ces dispositifs de contrôle de la dynamique du véhicule selon divers configurations définissant différents modes de conduite.

Pour ce faire, le dispositif de sélection est relié aux dispositifs de contrôle de la dynamique à partir d'un réseau embarqué du véhicule. Dans cette configuration, le dispositif de sélection échange en permanence avec ces dispositifs de contrôle des données qui sont relatives notamment à leur état de fonctionnement. Lorsque le conducteur du véhicule sélectionne un mode de conduite à partir du dispositif de sélection, ce dernier vérifie que tous les dispositifs de contrôle concernés par le changement de mode de conduite présentent un état de fonctionnement satisfaisant avant de leur transmettre une instruction de changement de mode de conduite. De cette manière, les dispositifs de contrôle de la dynamique du véhicule engagent alors simultanément ce changement de mode de conduite.

Cependant, de tels systèmes qui sont de conception très complexe manquent souvent de robustesse du fait que le changement de mode de conduite ne peut être réalisé si un des dispositifs de contrôle de la dynamique du véhicule présente un état de fonctionnement non satisfaisant.

La présente invention vise à pallier les inconvénients liés aux systèmes et procédé de gestion d'un changement de mode de conduite de l'état de l'art.

Avantageusement, la présente invention permet de fournir un système de gestion d'un changement de mode de conduite qui soit de conception et d'un fonctionnement très simples, et qui soit également robuste, fiable et économique.

Dans ce dessein, l'invention concerne un procédé de gestion d'un changement de mode de conduite d'un véhicule automobile comprenant les étapes suivantes :
- réception d'une requête relative à un mode de conduite par au moins un dispositif de contrôle de la dynamique du véhicule et au moins un dispositif de contrôle d'ambiance de conduite du véhicule ;
- sélection de critères de changement de mode conduite en fonction de ladite requête reçue réalisée par ledit au moins un dispositif de contrôle de la dynamique du véhicule et par ledit au moins un dispositif de contrôle d'ambiance de conduite ;
- validation de conditions de réalisation du changement de mode de conduite par ledit au moins un dispositif de contrôle de la dynamique, et
- initiation du changement de mode de conduite par ledit au moins un dispositif de contrôle de la dynamique du véhicule et ledit au moins un dispositif de contrôle d'ambiance de conduite
- l'étape de validation comprenant les sous-étapes suivantes :
   - contrôle de la capacité dudit au moins un dispositif de contrôle de la dynamique du véhicule à pouvoir réaliser le changement de mode de conduite en fonction de son état de fonctionnement, et
   - vérification que des conditions de stabilité et de confort du véhicule permettent la mise en oeuvre du changement de mode de conduite par le dispositif de contrôle de la dynamique du véhicule, les conditions de stabilité étant notamment définies par une variation d'un couple du volant de direction et par une variation d'un angle de braquage du volant.

Dans d'autres modes de réalisation :
- une sous-étape de vérification prévoit que ledit au moins un dispositif de contrôle de la dynamique du véhicule est apte à mettre en oeuvre le changement de mode de conduite si :
   - une valeur de variation d'un couple volant et une valeur d'angle de braquage du volant déterminées par ledit au moins un dispositif de contrôle de la dynamique, sont sensiblement inférieures à respectivement une valeur seuil de variation du couple volant et une valeur seuil de variation d'angle de braquage du volant, et/ou
   - une valeur de somme des effets d'une valeur de variation d'un couple volant et d'une valeur d'angle de braquage du volant déterminée par ledit au moins un dispositif de contrôle de la dynamique, est sensiblement inférieure à une valeur seuil de variation du couple volant et inférieure à une valeur seuil de variation d'angle de braquage du volant ;
- l'étape d'initiation prévoit un instant d'initiation du changement de mode de conduite qui est déterminé en fonction d'une durée qui débute à compter d'un instant de réception de la requête de changement de mode de conduite reçue par ledit au moins un dispositif de contrôle de la dynamique du véhicule et ledit au moins un dispositif de contrôle d'ambiance de conduite du véhicule ;
- l'étape d'initiation prévoit un instant d'initiation du changement de mode de conduite par ledit au moins un dispositif de contrôle d'ambiance de conduite du véhicule qui succède de manière sensiblement instantanée à un instant de réception de la requête de changement de mode de conduite ;
- l'étape d'initiation prévoit :
   - une initiation du changement de mode de conduite par plusieurs dispositifs de contrôle de la dynamique du véhicule qui est réalisée de manière séquentielle, et/ou
   - une initiation du changement de mode de conduite par plusieurs dispositifs de contrôle d'ambiance de conduite du véhicule qui est réalisée de manière simultanée.
- chaque dispositif de contrôle de la dynamique est apte à mettre en oeuvre de manière autonome/indépendante les étapes de sélection, de validation et d'initiation du changement de mode conduite, et/ou
- chaque dispositif de contrôle d'ambiance est apte à mettre en oeuvre de manière autonome/indépendante les étapes de sélection et d'initiation du changement de mode conduite de conduite du véhicule.

L'invention concerne aussi un système de gestion d'un changement de mode de conduite d'un véhicule automobile pour la mise en oeuvre d'un tel procédé comprenant :
- un dispositif de sélection du mode de conduite ;
- au moins un dispositif de contrôle de la dynamique du véhicule, et
au moins un dispositif de contrôle d'ambiance de conduite du véhicule, le dispositif de sélection du mode de conduite étant connecté audit au moins un dispositif de contrôle de la dynamique du véhicule et audit au moins un dispositif de contrôle d'ambiance de conduite du véhicule, ledit au moins un dispositif de contrôle de la dynamique comprenant les moyens suivants :
- de contrôle de la capacité dudit au moins un dispositif de contrôle de la dynamique (3) du véhicule à pouvoir réaliser le changement de mode de conduite en fonction de son état de fonctionnement, et
- de vérification que des conditions de stabilité et de confort du véhicule permettent la mise en oeuvre du changement de mode de conduite par le dispositif de contrôle de la dynamique du véhicule.

Dans d'autres modes de réalisation :
- ledit au moins un dispositif de contrôle de la dynamique du véhicule et ledit au moins un dispositif de contrôle d'ambiance de conduite comprennent chacun une unité de commande et une unité fonctionnelle, et/ou
- une unité de commande dudit au moins un dispositif de contrôle de la dynamique du véhicule et dudit au moins un dispositif de contrôle d'ambiance comprend des critères de changement de mode de conduite, et/ou
- le dispositif de sélection du mode de conduite est connecté audit au moins un dispositif de contrôle d'ambiance de conduite et audit au moins un dispositif de contrôle de la dynamique du véhicule par l'intermédiaire d'un réseau embarqué dans le véhicule notamment un réseau de type bus CAN.

L'invention concerne également, un programme d'ordinateur comprenant des instructions de code de programme pour l'exécution des étapes d'un tel procédé lorsque ledit programme est exécuté par un dispositif de sélection du mode de conduite, par au moins un dispositif de contrôle de la dynamique du véhicule et par au moins un dispositif de contrôle d'ambiance de conduite du véhicule.

L'invention concerne aussi un véhicule automobile comprenant un tel système de gestion d'un changement de mode de conduite.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 est une représentation schématique d'un système de gestion d'un changement de mode de conduite selon le mode de réalisation de l'invention ;
- la figure 2 est un logigramme relatif à un procédé de gestion d'un changement de mode de conduite d'un véhicule automobile selon le mode de réalisation de l'invention ;
- les figures 3A et 38 sont des illustrations relatives aux variations d'un couple au volant de direction et d'un angle de braquage du véhicule considérées de manière indépendante dans le cadre de la mise en oeuvre d'une étape de validation du procédé de gestion d'un changement de mode de conduite selon le mode de réalisation de l'invention ;

- les figures 4A et 4B sont des illustrations relatives aux variations du couple au volant de direction et de l'angle de braquage du véhicule considérées de manière combinée dans le cadre de la mise en oeuvre de l'étape de validation du procédé de gestion d'un changement de mode de conduite selon le mode de réalisation de l'invention, et
- la figure 5 est une représentation schématique du fonctionnement du procédé de gestion d'un changement de mode de conduite selon le mode de réalisation de l'invention.

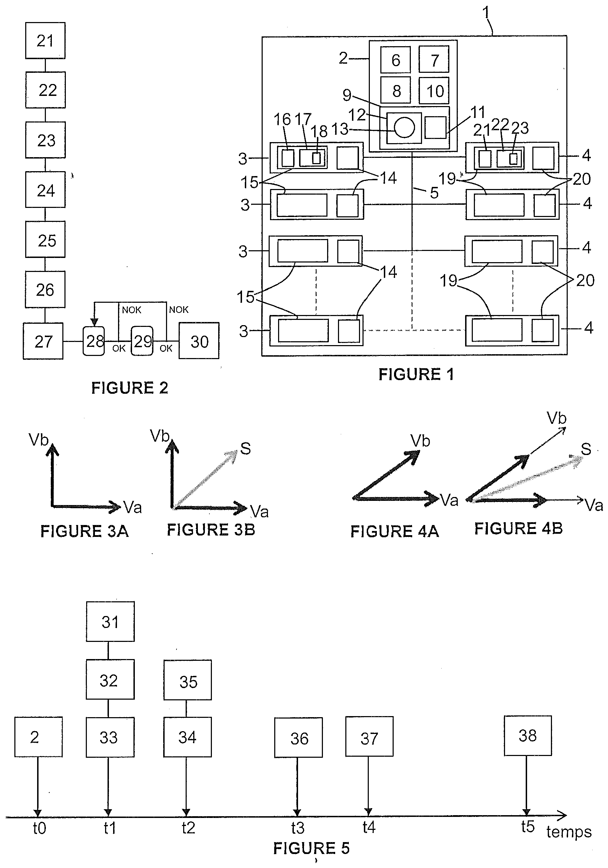

Dans le mode de réalisation de l'invention illustré sur la figure 1, le système 1 de gestion d'un changement de mode de conduite est de préférence un système dit « multisensoriel » comprenant de manière non limitative et non exhaustive :
- un dispositif de sélection 2 du mode de conduite ;
- au moins un dispositif de contrôle de la dynamique 3 du véhicule autrement appelé « système châssis », et
- au moins un dispositif de contrôle d'ambiance 4 de conduite autrement appelé « système d'ambiance ».

Le dispositif de sélection 2 du mode de conduite comprend par exemple :
- des éléments de saisie 6 tels qu'un écran tactile, un clavier ou encore un système de commande vocale ;
- une interface d'affichage 7 ;
- une interface sonore 8 ;
- unité de traitement 9 comprenant des éléments matériels et/ou logiciels, et
- une interface de communication 10 reliée à un réseau 5 embarqué dans le véhicule.

Un tel dispositif de sélection 2 peut par exemple être compris dans un équipement de radio navigation du véhicule plus connu sous l'acronyme RAD-NAV, ou dans un calculateur de bord, plus connu sous l'acronyme BCM.

Les éléments matériels et/ou logiciels de l'unité de traitement 9 comportent plus précisément au moins un processeur 11 coopérant avec des éléments de mémoire 12. Cette unité de traitement 2 est apte à exécuter des instructions pour la mise en oeuvre d'un programme d'ordinateur.

Ce dispositif de sélection 2 est apte à transmettre par exemple à un conducteur du véhicule, différents modes de conduite qui peuvent être sélectionnés à partir des éléments de saisie 6. Ces modes de conduites sont de manière non exhaustive et non limitative au nombre de cinq et correspondent par exemple à :
- un mode dit « sport » qui amplifie le plaisir de conduite ;
- un mode dit « confort » qui feutre la route et calme la conduite ;
- un mode dit « neutre » qui est équilibré entre sport et confort ;
- un mode dit « économique » ou encore « éco » qui va mettre en scène l'esprit économique du véhicule (orienté réduction de la consommation de carburant), et/ou l'esprit écologique du véhicule (orienté bien-être et réduction de l'empreinte carbone), et
- un mode dit « personnalisé » qui permet de configurer un mode pouvant reprendre tout ou partie des caractéristiques des modes de conduite évoqués précédem ment.

Le dispositif de sélection 2 est relié *via* son interface de communication 10 au réseau 5 embarqué qui peut être multiplexe et correspond de préférence à un réseau connu sous l'appellation bus "CAN " (Contrôler Area Network). Le CAN, décliné en différentes normes (ISO 11898-2, ISO11898-3, SAE J2411) suivant la vitesse ou le nombre de lignes de communications utilisées est le protocole de communication de loin le plus utilisé aujourd'hui chez les constructeurs mondiaux de véhicules. Mais l'invention pourrait se généraliser à d'autres réseaux embarqués (VAN, LIN, Flexray, AFDX...), et à tous les systèmes de communication par réseau numérique équipant ces véhicules.

Dans le présent mode de réalisation, le système 1 comprend au moins un dispositif de contrôle de la dynamique 3 du véhicule avec lequel le dispositif de sélection 2 est connecté par l'intermédiaire du réseau 5 embarqué. Le dispositif de contrôle de la dynamique 3 du véhicule est apte à agir sur le mouvement/déplacement du véhicule et les ressentis cinétiques par le conducteur pilotant ce véhicule. Le système 1 comprend de préférence plusieurs dispositifs de contrôle de la dynamique 3 qui coopèrent avec le dispositif de sélection 2. Chaque dispositif de contrôle de la dynamique 3 comprend une unité de commande 15 et une unité fonctionnelle 14. L'unité de commande 15 est apte à contrôler l'unité de fonctionnelle 14 qui agit de manière directe sur le comportement du véhicule.

Ce dispositif de contrôle de la dynamique 3 du véhicule correspond de manière non exhaustive et non limitative à :
- un système de gestion de direction avant ;
- un système de gestion de direction arrière ;
- un système de gestion du freinage ;
- un système de gestion des amortisseurs pour le contrôle de la suspension du véhicule ;
- un système de gestion d'un moteur du véhicule ;
- un système de gestion d'une boîte de vitesse, et/ou
- un système de gestion de l'aide/assistance à la conduite notamment apte à assurer un pilotage du véhicule automobile de manière entièrement ou partiellement autonome.

Ainsi que nous l'avons vu, le système 1 comprend également au moins un dispositif de contrôle d'ambiance 4 de conduite du véhicule qui est connecté au dispositif de sélection 2 par l'intermédiaire du réseau 5. Le système 1 comprend de préférence plusieurs dispositifs de contrôle d'ambiance 4 qui coopèrent avec le dispositif de sélection 2. Chaque dispositif de contrôle d'ambiance 4 comprend une unité de commande 19 et une unité fonctionnelle 20. L'unité de commande 19 est apte à contrôler l'unité de fonctionnelle 20 qui agit de manière directe sur l'ambiance de conduite du véhicule notamment sur l'ambiance sonore, visuelle, tactile ou encore olfactive.

Ce dispositif de contrôle d'ambiance 4 correspond de manière non exhaustive et non limitative à :
- un système de gestion de l'éclairage d'ambiance de l'habitacle du véhicule ;
- un système de gestion du son dans l'habitacle en reproduisant par exemple des sons relatifs au moteur pour renforcer le son d'origine de ce dernier et/ou des sons relatifs au fonctionnement du véhicule tel que des sons liés à des alertes et/ou des indications sonores, et/ou des sons d'ambiance associés à un design sonore ;
- un système de gestion de l'éclairage des interfaces visuelles et/ou des interfaces de commande d'équipements du véhicule qui est apte à faire par exemple varier l'intensité lumineuse ou la colorimétrie des sources lumineuse comprises dans les interfaces visuelles telles que des indicateurs d'information présents au niveau du tableau de bord comme les compteurs de vitesse et/ou de régime moteur, et dans les interfaces de commande telles que des boutons de contrôle et/ou créer des formes lumineuses renforçant le caractère sensoriel d'un mode en cours ;
- un système de gestion du contenu informatif des interfaces visuelles du véhicule apte par exemple à adapter le contenu informatif des compteurs ou des systèmes multimédia selon le mode de conduite sélectionné ;
- un système de gestion des équipements qui ont une incidence sur le fonctionnement de manière écologique et économique du véhicule comme par exemple les systèmes de chauffage et de climatisation ;
- un système de gestion de modules ayant notamment une fonction de confort et qui sont agencés dans le véhicule, par exemple un module de massage compris dans un siège du véhicule.

L'unité de commande 15, 19 de chaque dispositif de contrôle de la dynamique 3 du véhicule et de chaque dispositif d'ambiance 4 comprend des éléments matériels et/ou logiciels plus précisément au moins un processeur 16, 21 coopérant avec des éléments de mémoire 17, 22. L'unité de commande 15, 19 est apte à exécuter des instructions pour la mise en oeuvre du programme d'ordinateur. Pour chaque dispositif de contrôle de la dynamique 3 du véhicule et chaque dispositif d'ambiance 4, on comprend que l'unité fonctionnelle 14, 20 est une composante de ces dispositifs de contrôle respectifs 3, 4 qui est pilotée par l'unité de commande respective 15, 19. A titre d'exemple lorsque le dispositif de contrôle de la dynamique 3 du véhicule correspond au système de gestion du moteur, cette unité fonctionnelle 14 correspond au moteur.

On notera que les éléments de mémoire 17, 22 des dispositifs de contrôle de la dynamique 3 du véhicule et de contrôle d'ambiance 4 archivent des critères 18, 23 de changement de mode de conduite comprenant :
- des paramètres de configuration de l'unité fonctionnelle 14, 20, et
- des données en rapport avec une durée T relative à un instant dit « d'initiation » du changement de mode de conduite à partir duquel les paramètres de configuration doivent être appliqués à l'unité fonctionnelle 14, 20.

Les critères 18 de chaque dispositif de contrôle de la dynamique 3 du véhicule comprennent en complément des données en rapport avec des conditions de stabilité et de confort du véhicule. Ces conditions comportent des valeurs seuils de variation de couple volant, de variation d'angle de braquage du volant, de variations de la vitesse d'angle du volant, ainsi qu'une valeur de somme seuil des effets cumulés, correspondant à la somme de ces valeurs seuil de variation des paramètres mentionnés.

On notera que dans ce système 1, chaque dispositif de contrôle de la dynamique 3 du véhicule fonctionne de manière indépendante par rapport aux autres dispositifs de contrôle de la dynamique 3 équipant le véhicule et également par rapport aux dispositifs de contrôle d'ambiance 4. Il en est de même au sujet de chaque dispositif de contrôle d'ambiance 4 de conduite du véhicule.

Le système 1 est apte à mettre en oeuvre un procédé de gestion d'un changement de mode de conduite illustré sur la figure 2.

Ce procédé comprend une étape initiale de paramétrage 21 du dispositif de sélection 2 lors de laquelle il est apte à détecter les dispositifs de contrôle de la dynamique 3 et/ou les dispositifs de contrôle d'ambiance 4 équipant le véhicule. Ce dispositif de sélection 2 est également apte à détecter les dispositifs de contrôle 3, 4 nouvellement ajoutés dans le véhicule ou encore nouvellement activés. Les dispositifs de contrôle 3, 4 ainsi détectés sont alors configurés dans le dispositif de sélection 2 afin d'être utilisés dans le cadre du fonctionnement des différents modes de conduite du véhicule. La configuration des dispositifs de contrôle 3, 4 dans le dispositif de sélection 2 est archivée sous la forme des données 13 dans les éléments de mémoire 12 de l'unité de traitement 9 de ce dispositif de sélection 2. Une telle étape de paramétrage 21 est réalisée de préférence lors de la fabrication du véhicule en usine et/ou auprès d'un concessionnaire automobile.

Le procédé de gestion d'un changement de mode de conduite comprend une étape de sélection 22 lors de laquelle un des modes de conduite qui sont diffusés par le dispositif de sélection 2 est sélectionné à partir des éléments de saisie 6 de ce dispositif de sélection 2. On notera que ces différents modes de conduite peuvent être diffusés via l'interface d'affichage 7 et/ou l'interface sonore 8 du dispositif de sélection 2.

Le procédé comprend ensuite une étape de traitement 23 visant à identifier les dispositifs de contrôle de la dynamique 3 et d'ambiance 4 de conduite du véhicule qui sont susceptibles d'être utilisés pour la mise en oeuvre du mode de conduite sélectionné. Plus précisément, l'unité de traitement 9 du dispositif de sélection 2 réalise une identification des dispositifs de contrôle 3, 4 concernés à partir des données 13 archivées dans les éléments de mémoire 12 de ce dispositif de sélection 2. Ces données 13 comprennent pour chaque mode de conduite susceptible d'être mis en oeuvre dans le véhicule, les dispositifs de contrôle de la dynamique 3 et d'ambiance 4 de conduite du véhicule qui ont été détectés et configurés dans le dispositif de sélection 2 lors de l'étape de paramétrage 21. Une fois ces dispositifs de contrôle de la dynamique 3 et d'ambiance 4 de conduite du véhicule ont été identifiés, l'unité de traitement 9 génère alors une requête relative au changement de mode de conduite.

Lors d'une étape de transmission 24, l'unité de traitement 9 du dispositif de sélection 2 envoie via son interface de communication 10 et le réseau 5 embarqué, la requête de changement de mode de conduite à chaque dispositif de contrôle de la dynamique 3 et de contrôle d'ambiance 4 identifiés lors de l'étape de traitement 23 et en particulier à l'unité de commande 15, 19 de chacun de ces dispositifs de contrôle 3, 4.

Lors d'une étape réception 25 de cette requête par l'unité de commande 15, 19 de chacun des dispositifs de contrôle d'ambiance 4 et de contrôle de la dynamique 3, un traitement de ladite requête est réalisé par l'unité de commande 15, 19 visant à identifier le mode de conduite sélectionné.

Par la suite, le procédé comprend une étape de sélection 26 réalisée par l'unité de commande 15, 19 de chacun des dispositifs de contrôle d'ambiance 4 et de contrôle de la dynamique 3, durant laquelle les critères 18, 23 de changement de mode de conduite sont sélectionnés dans les éléments de mémoire 17, 22 de l'unité de commande 15, 19 de chacun des dispositifs de contrôle 3, 4 afin de mettre en oeuvre le mode de conduite identifié lors de l'étape de réception 25. Ainsi que nous l'avons déjà précisé, ces critères 18 comprennent des paramètres de configuration de l'unité fonctionnelle 14, 20 de chacun des dispositifs de contrôle 3, 4 et comportent également une durée T qui permet de déterminer à compter d'un instant de réception de la requête, l'instant d'initiation où le changement de mode de conduite doit être initié par les dispositifs de contrôle 3, 4. S'agissant des critères 18 de chaque dispositif de contrôle de la dynamique 3 du véhicule, ils comprennent en complément les données relatives aux conditions de stabilité du véhicule.

Le procédé comprend ensuite une étape de validation 27 des conditions de réalisation du changement de mode de conduite par chaque dispositif de contrôle de la dynamique 3 du véhicule. Cette étape de validation 27 permet de vérifier que :
- les conditions de réalisation du changement de mode de conduite respectent bien les conditions de sécurité de fonctionnement du dispositif de contrôle de la dynamique 3 du véhicule ; et
- l'effet sur les conditions de stabilité du véhicule résultant de la mise en oeuvre du changement de mode de conduite par le dispositif de contrôle 3 de la dynamique du véhicule, est faible voire nul.

Cette étape de vérification 27 est réalisée avant une étape d'initiation du changement de mode de conduite par les dispositifs de contrôle de la dynamique 3 du véhicule, c'est-à-dire avant la mise en oeuvre du changement de mode de conduite par ces dispositifs de contrôle de la dynamique 3.

Plus précisément, cette étape de validation 27 comprend une sous-étape de contrôle 28 de la capacité de chaque dispositif de contrôle de la dynamique 3 du véhicule à pouvoir contribuer à la réalisation du changement de mode de conduite en fonction de l'état de fonctionnement de ce dispositif de contrôle de la dynamique 3. Autrement dit, un dispositif de contrôle de la dynamique 3 du véhicule détermine indépendamment des autres dispositifs de contrôle 3, 4 et en fonction de ses propres contraintes de sécurité, s'il est apte à opérer le changement de mode de conduite.

Plus précisément, l'unité de commande 15 de ce dispositif de contrôle de la dynamique 3 effectue au moins une mesure des paramètres de fonctionnement de l'unité fonctionnelle 14 afin de déterminer l'état de fonctionnement de ce dispositif de contrôle de la dynamique 3. Lors de cette sous-étape de contrôle 28, l'unité de commande 15 réalise un traitement particulier des paramètres de fonctionnement mesurés précédemment ainsi que des paramètres de configuration relatifs au mode de conduite sélectionné provenant des critères 18, afin d'estimer dans quelle mesure le changement de mode de conduite peut être réalisé au regard notamment des contraintes de sécurité du dispositif de contrôle 3.

Si l'unité de commande 15 détermine que le dispositif de contrôle de la dynamique 3 n'est pas apte à réaliser le changement de mode de conduite alors la sous-étape de détermination 28 est de nouveau réalisée et ce jusqu'à ce que ce dispositif de contrôle de la dynamique 3 du véhicule soit apte à effectuer le changement de mode de conduite au regard notamment de ses contraintes de sécurité.

A l'inverse, si l'unité de traitement 15 détermine que le dispositif de contrôle de la dynamique 3 du véhicule est apte à réaliser le changement de mode de conduite alors l'étape de validation 27 prévoit une sous-étape de vérification 29 que des conditions de stabilité du véhicule permettent la mise en oeuvre du changement de mode de conduite par le dispositif de contrôle de la dynamique 3 du véhicule. Cette sous-étape de vérification 29 contribue à sécuriser le changement de mode de conduite opéré par le dispositif de contrôle de la dynamique 3 du véhicule au regard de l'effet que peut avoir ce changement sur les conditions de stabilité du véhicule. Plus précisément, cette sous-étape de vérification 29 permet de contrôler que la contribution de cet effet du dispositif de contrôle de la dynamique 3 aux effets résultant des autres dispositifs de contrôle de la dynamique 3 intervenant dans le changement de mode de conduite, n'a qu'un impact limité sur les conditions de stabilité du véhicule. Ces conditions de stabilité du véhicule sont définies notamment par la variation d'un couple Va du volant de direction et la variation d'un angle Vb de braquage du volant, et ces conditions ont un impact direct sur comportement du véhicule.

Dans le cadre de la mise en oeuvre de cette sous-étape de vérification 29, les variations du couple Va du volant de direction et d'angle Vb de braquage du volant peuvent être considérées de manière indépendante en référence aux figures 3A et 3B, ou de manière combinée, en considérant leurs effets cumulés, en référence aux figures 4A et 4B.

Lors de cette sous-étape de vérification 29 l'unité de commande 15 du dispositif de contrôle de la dynamique 3 est apte à déterminer sur la base de mesure de paramètres de fonctionnement du dispositif de contrôle de la dynamique 3 et des paramètres de configuration relatifs au mode de conduite sélectionné : une valeur de variation de couple Va du volant de direction, une valeur de variation d'angle Vb de braquage du volant ainsi qu'une valeur de somme S résultant de la somme des effets de ces deux valeurs de variation de couple Va et d'angle Vb. On comprend que la valeur de somme S et les valeurs de variation de couple Va et d'angle Vb sont des estimations qui sont susceptibles de résulter de la mise en oeuvre du changement de mode de conduite par le dispositif de contrôle de la dynamique 3 du véhicule.

Ainsi, lors de cette sous-étape de vérification 29 si :
- la valeur de variation de couple volant Va et la valeur d'angle de braquage Vb du volant sont sensiblement inférieures à respectivement la valeur seuil de variation du couple volant et la valeur seuil de variation d'angle de braquage du volant, et/ou
- la valeur de somme S des effets de la valeur de variation de couple Va volant avec la valeur de variation d'angle Vb de braquage du volant est sensiblement inférieure à la valeur de seuil de variation du couple volant et à la valeur seuil de variation d'angle de braquage du volant,
alors le dispositif de contrôle de la dynamique 3 du véhicule est apte à mettre en oeuvre le changement de mode de conduite et plus précisément le mode de conduite sélectionné.

A l'inverse si les conditions de stabilité du véhicule ne sont pas vérifiées, alors les sous-étapes de contrôle 28 et de vérification 29 sont alors réitérées. Ces deux sous-étapes 28, 29 sont alors renouvelées jusqu'à ce que leurs conditions soient satisfaites, ce qui induit alors que le changement de mode de conduite par le dispositif de contrôle de la dynamique 3 du véhicule est effectué ultérieurement et ce sans préjudice sur le changement de mode de conduite des autres dispositifs de contrôle de la dynamique et de l'ambiance de conduite 3, 4 intervenant dans le cadre de ce changement de mode de conduite.

On notera que les sous-étapes de contrôle 28 et de vérification 29 peuvent être réalisées dans un ordre différent. En effet, l'étape de vérification 29 peut être effectuée avant l'étape de contrôle 28.

Les valeurs seuils de variation du couple volant et de variation d'angle volant sont des valeurs maximales au-delà desquelles le comportement du véhicule est considéré comme non pertinent d'un point de vue prestation (ressenti jugé comme non agréable pour l'utilisateur) tout en restant éloigné des conditions limites d'instabilité du véhicule.. Une telle situation résulte des effets conjugués sur le comportement du véhicule qui proviennent du changement volontaire ou intempestif du mode de conduite émanant du dispositif de sélection 2, et qui est mis en oeuvre par les différents dispositifs de contrôle de la dynamique 3 du véhicule. Ce comportement du véhicule est alors susceptible de perturber le conducteur lors du changement de mode de conduite et/ou de le placer dans une situation qui peut être perçue comme anxiogène, ou du moins laissant à penser qu'un problème technique survient.

En complément, on remarquera que l'étape de validation 27 permet également d'éviter que des requêtes intempestives générées par le dispositif de sélection 2 qui sont relatives à des changements de mode de conduite ne provoquent un changement brutal et inattendu du comportement du véhicule qui soit dangereux et perturbant pour le conducteur.

Par la suite, le procédé prévoit une étape d'initiation 30 du changement de mode de conduite par chaque dispositif de contrôle de la dynamique 3 du véhicule et par chaque dispositif de contrôle d'ambiance 4 et ce, par la mise en oeuvre des critères 18, 23 de changement de mode de conduite. Plus précisément, l'unité de commande 15, 22 de chaque dispositif de contrôle 3, 4 assure le contrôle de l'unité fonctionnelle 14, 20 en lui appliquant les paramètres de configuration provenant des critères 18, 23.

Cette étape d'initiation 30 est réalisée à l'instant d'initiation déterminé en fonction de la durée T qui débute à compter de l'instant de réception de la requête reçue par chaque dispositif de contrôle 3, 4 relative au changement de mode de conduite. Ainsi que nous l'avons vu précédemment, l'initiation des dispositifs de contrôle de la dynamique 3 peut avoir lieu après cet instant d'initiation qui est prédéfinie, dès lors que ces dispositifs de contrôle 3 ne sont pas en mesure de mettre en oeuvre le changement de mode de conduite à l'échéance de cet instant d'initiation.

Ainsi que nous l'avons évoqué précédemment, chaque dispositif de contrôle de la dynamique 3 du véhicule ainsi que chaque dispositif de contrôle d'ambiance 4 du véhicule comprend les critères 18, 23 de changement de mode de conduite qui sont propres à chacun de ces dispositifs de contrôle 3, 4 et fonction du mode de conduite sélectionné. Ces critères comprennent les paramètres de configuration de l'unité fonctionnelle 14, 20 et les données relatives à la durée T permettant de définir l'instant d'initiation du changement de mode de conduite où les paramètres de configuration doivent être appliqués à l'unité fonctionnelle 14, 20. Dans un exemple de changement de mode de conduite décrit sur la figure 5, à l'instant de réception t0 les dispositifs de contrôle de la dynamique 3 du véhicule et d'ambiance 4 de conduite du véhicule reçoivent du dispositif de sélection 2 une requête de changement de mode de conduite, instant qui peut être assimilé à celui où le conducteur change le mode au niveau du dispositif de sélection 2. On considère que le mode de conduite sélectionné au niveau du dispositif de sélection 2 est le mode sport. Dans cet exemple, les dispositifs de contrôle 3, 4 intervenant pour la mise en oeuvre du changement de mode de conduite au profit de ce mode sport correspondent à ceux qui sont susceptibles de créer des ressentis sportifs par le conducteur. Ces dispositifs de contrôle 3, 4 sont de manière non limitative et non exhaustive :
- pour les dispositifs de contrôle d'ambiance 4 de conduite : le système de gestion du son 31 dans l'habitacle, le système de gestion de l'éclairage 32 des interfaces visuelles et/ou des interfaces de commande d'équipements du véhicule et le système de gestion du contenu informatif 33 des interfaces visuelles du véhicule.
- pour les dispositifs de contrôle de la dynamique 3 du véhicule : le système de gestion de direction avant 37, le système de gestion de direction arrière 38, le système de gestion du moteur 34 du véhicule, le système de gestion de la boîte de vitesse 35, et le système de gestion des amortisseurs 36.

A l'instant d'initiation t1 de changement de l'ambiance, les systèmes de gestion du son 31 dans l'habitacle, de gestion de l'éclairage 32 des interfaces visuelles et/ou des interfaces de commande d'équipements du véhicule et de gestion du contenu informatif 33 des interfaces visuelles du véhicule mettent en oeuvre le changement en mode sport. Plus précisément, des haut-parleurs du système de gestion du son 31 émettent un son renforcé qui est adapté aux sonorités du moteur, la colorimétrie et l'intensité des sources lumineuses comprises dans des compteurs du tableau de bord du véhicule sont modifiées et les informations portant sur le fonctionnement du véhicule affichées dans ces compteurs sont adaptées pour délivrer un contenu informatif plus en rapport avec ce mode sport en affichant par exemple des données sur les performances du moteur.

A l'instant d'initiation t2, les systèmes de gestion du moteur 34 et de gestion de la boîte de vitesse 35 réalisent à leur tour le changement de mode en passant en mode sport. Dans ces conditions, le moteur et la boîte de vitesse sont alors configurés de sorte que le conducteur dispose du potentiel maximal d'accélération de son véhicule lorsqu'il le requiert, par exemple par l'augmentation progressive du couple moteur et la configuration du passage des rapports de vitesse à des régimes moteur plus élevés.

Ensuite à l'instant d'initiation t3, le système de gestion des amortisseurs 36 fonctionne en mode sport avec des lois d'amortissement du véhicule qui sont alors modifiées à partir du pilotage des suspensions du véhicule de façon à les rendre plus ferme.

Par la suite, les systèmes de gestion de direction avant 37 et de direction arrière 38 effectuent respectivement aux instants d'initiation t4 et t5 le changement de mode de conduite en passant en mode sport par l'amélioration de l'agilité, la fermeté, la précision de la direction et l'adaptation du rayon de braquage des directions avant et arrière entre elles.

Dans cet exemple, les dispositifs de contrôle d'ambiance 4 de conduite du véhicule changent de mode de conduite de manière quasi-instantanée dès qu'ils reçoivent du dispositif de sélection 2 la requête de changement de mode de conduite. Autrement dit, l'instant d'initiation t1 du changement de mode de conduite par le dispositif de contrôle d'ambiance 4 de conduite du véhicule succède de manière sensiblement instantanée à l'instant de réception t0 de la requête de changement de mode de conduite. Cet instant d'initiation t1 est compris entre environ 0,1 et 0,3 s, et est de préférence de 0,2 s.

S'agissant des autres instants d'initiation t2 à t5, ils sont par exemple :
- pour l'instant d'initiation t2 compris entre environ 0,1 et 0,2 s, et est de préférence de 0,2 s ;
- pour l'instant d'initiation t3 compris entre environ 0,5 et 1 s, et est de préférence de 1 s ;
- pour l'instant d'initiation t4 compris entre environ 0,5 et 1 s, et est de préférence de 1 s, et
- pour l'instant d'initiation t5 compris entre environ 1 et 10 s, et est de préférence de 2 s.

On notera en outre que l'initiation du changement de mode de conduite par plusieurs dispositifs de contrôle de la dynamique 3 du véhicule est réalisée de manière séquentielle. Et, l'initiation du changement de mode de conduite par plusieurs dispositifs de contrôle d'ambiance 4 de conduite du véhicule est réalisée de manière simultanée.

Ainsi que nous l'avons précisé précédemment, les instants d'initiation t1 à t5 des dispositifs de contrôle 3, 4 sont déterminés à partir de la durée T définie dans les critères 18, 23 compris dans les éléments de mémoire 22, 17 de chaque unité de commande 15, 19 des dispositifs de contrôle de la dynamique 3 du véhicule et d'ambiance 4 de conduite. Cependant, dans la mesure où l'unité de commande 15 détermine lors de l'étape de vérification 27 du procédé que le dispositif de contrôle de la dynamique 3 du véhicule n'est pas en mesure de réaliser le changement de mode de conduite, ce dernier met alors en oeuvre le changement de mode de conduite à un instant d'initiation ultérieure qui peut être différent de l'instant d'initiation t2, t3, t4 ou t5 défini dans les critères 18. Mais ce changement de mode de conduite tardif est réalisé de manière douce grâce à la mise en oeuvre de l'étape de validation 27. De plus le fait, qu'un dispositif de contrôle de la dynamique 3 du véhicule et d'ambiance 4 met en oeuvre le changement de mode de conduite ultérieurement n'a pas de conséquence sur la mise en oeuvre de ce changement par les autres dispositifs de contrôle 3, 4.

Ainsi, le procédé prévoit alors un changement de mode de conduite qui est réalisé de manière progressive par les dispositifs de contrôle de la dynamique 3 du véhicule et d'ambiance 4 de conduite de sorte que le conducteur n'est pas un ressenti désagréable résultant des effets conjuguées du changement de mode de conduite mis en oeuvre par ces dispositifs de contrôle 3, 4.

En outre, une des particularités de l'invention réside dans le fait que chaque dispositif de contrôle de la dynamique 3 est apte à mettre en oeuvre de manière autonome/indépendante les étapes de sélection 26, de validation 27 et d'initiation 30 du changement de mode de conduite de ce procédé. De la même façon, chaque dispositif de contrôle d'ambiance 4 est apte à mettre en oeuvre de manière autonome/indépendante les étapes de sélection 26 et d'initiation 30 du changement de mode de conduite du véhicule.

L'invention concerne également le programme d'ordinateur qui comprend des instructions de code de programme pour l'exécution des étapes du procédé de gestion du changement de mode de conduite. Dans ce mode de réalisation, ce programme est exécuté par l'unité de traitement 9 du dispositif de sélection 2 et par les unités de commandes 15, 19 des dispositifs de contrôle de la dynamique 3 du véhicule et d'ambiance 4 de conduite.

La présente invention n'est pas limitée au mode de réalisation qui a été explicitement décrit, mais elle en inclut les diverses variantes et généralisations contenues dans le domaine des revendications ci-après.

## Revendications

1. Procédé de gestion d'un changement de mode de conduite d'un véhicule automobile comprenant les étapes suivantes :
- réception (25) d'une requête relative à un mode de conduite par au moins un dispositif de contrôle de la dynamique (3) du véhicule et au moins un dispositif de contrôle d'ambiance (4) de conduite du véhicule ;
- sélection (26) de critères (18, 23) de changement de mode conduite en fonction de ladite requête reçue réalisée par ledit au moins un dispositif de contrôle de la dynamique (3) du véhicule et par ledit au moins un dispositif de contrôle d'ambiance (4) de conduite ;
- validation (27) de conditions de réalisation du changement de mode de conduite par ledit au moins un dispositif de contrôle de la dynamique (3), et
initiation (30) du changement de mode de conduite par ledit au moins un dispositif de contrôle de la dynamique (3) du véhicule et ledit au moins un dispositif de contrôle d'ambiance (4) de conduite, l'étape de validation (27) comprenant les sous-étapes suivantes :
- contrôle (28) de la capacité dudit au moins un dispositif de contrôle de la dynamique (3) du véhicule à pouvoir réaliser le changement de mode de conduite en fonction de son état de fonctionnement, et
- vérification (29) que des conditions de stabilité et de confort du véhicule permettent la mise en oeuvre du changement de mode de conduite par le dispositif de contrôle de la dynamique (3) du véhicule.

2. Procédé selon la revendication précédente, **caractérisé en ce que** les conditions de stabilité sont définies par une variation d'un couple du volant (Va) de direction et par une variation d'un angle de braquage (Vb) du volant.

3. Procédé selon l'une quelconque des revendications précédentes, **caractérisé en ce qu'**une sous-étape de vérification (29) prévoit que ledit au moins un dispositif de contrôle de la dynamique (3) du véhicule est apte à mettre en oeuvre le changement de mode de conduite si :
- une valeur de variation d'un couple volant (Va) et une valeur d'angle de braquage (Vb) du volant déterminées par ledit au moins un dispositif de contrôle de la dynamique (3), sont sensiblement inférieures à respectivement une valeur seuil de variation du couple volant et une valeur seuil de variation d'angle de braquage du volant, et/ou
- une valeur de somme (S) des effets d'une valeur de variation d'un couple volant (Va) et d'une valeur d'angle de braquage (Vb) du volant déterminée par ledit au moins un dispositif de contrôle de la dynamique (3), est sensiblement inférieure à une valeur seuil de variation du couple volant et inférieure à une valeur seuil de variation d'angle de braquage du volant.

4. Procédé selon l'une quelconque des revendications précédentes, **caractérisé en ce que** l'étape d'initiation (30) prévoit un instant d'initiation (t1, t2, t3, t4, t5) du changement de mode de conduite qui est déterminé en fonction d'une durée (T) qui débute à compter d'un instant de réception (t0) de la requête de changement de mode de conduite reçue par ledit au moins un dispositif de contrôle de la dynamique (3) du véhicule et ledit au moins un dispositif de contrôle d'ambiance (4) de conduite du véhicule.

5. Procédé selon l'une quelconque des revendications précédentes, **caractérisé en ce que** l'étape d'initiation (30) prévoit un instant d'initiation (t1) du changement de mode de conduite par ledit au moins un dispositif de contrôle d'ambiance (4) de conduite du véhicule qui succède de manière sensiblement instantanée à un instant de réception (t0) de la requête de changement de mode de conduite.

6. Procédé selon l'une quelconque des revendications précédentes, **caractérisé en ce que** l'étape d'initiation (30) prévoit :
- une initiation du changement de mode de conduite par plusieurs dispositifs de contrôle de la dynamique (3) du véhicule qui est réalisée de manière séquentielle, et/ou
- une initiation du changement de mode de conduite par plusieurs dispositifs de contrôle d'ambiance (4) de conduite du véhicule qui est réalisée de manière simultanée.

7. Procédé selon l'une quelconque des revendications précédentes, **caractérisé en ce que** :
- chaque dispositif de contrôle de la dynamique (3) est apte à mettre en oeuvre de manière autonome/indépendante les étapes de sélection (26), de validation (27) et d'initiation (30) du changement de mode conduite, et/ou
- chaque dispositif de contrôle d'ambiance (4) est apte à mettre en oeuvre de manière autonome/indépendante les étapes de sélection (26) et d'initiation (30) du changement de mode conduite de conduite du véhicule

8. Système de gestion d'un changement de mode de conduite d'un véhicule automobile pour la mise en oeuvre du procédé selon l'une quelconque des revendications précédentes comprenant :
- un dispositif de sélection (2) du mode de conduite ;
- au moins un dispositif de contrôle de la dynamique (3) du véhicule, et
au moins un dispositif de contrôle d'ambiance (4) de conduite du véhicule, le dispositif de sélection (2) du mode de conduite étant connecté audit au moins un dispositif de contrôle de la dynamique (3) du véhicule et audit au moins un dispositif de contrôle d'ambiance (4) de conduite du véhicule, ledit au moins un dispositif de contrôle de la dynamique (3) comprenant les moyens suivants :
- de contrôle de la capacité dudit au moins un dispositif de contrôle de la dynamique (3) du véhicule à pouvoir réaliser le changement de mode de conduite en fonction de son état de fonctionnement, et
- de vérification que des conditions de stabilité et de confort du véhicule permettent la mise en oeuvre du changement de mode de conduite par le dispositif de contrôle de la dynamique (3) du véhicule.

9. Système selon la revendication précédente, **caractérisé en ce que** :
- ledit au moins un dispositif de contrôle de la dynamique (3) du véhicule et ledit au moins un dispositif de contrôle d'ambiance (4) de conduite comprennent chacun une unité de commande (15, 19) et une unité fonctionnelle (14, 19), et/ou
- une unité de commande (15, 19) dudit au moins un dispositif de contrôle de la dynamique (3) du véhicule et dudit au moins un dispositif de contrôle d'ambiance (4) comprend des critères de changement de mode de conduite, et/ou
- le dispositif de sélection (2) du mode de conduite est connecté audit au moins un dispositif de contrôle d'ambiance (4) de conduite et audit au moins un dispositif de contrôle de la dynamique du véhicule par l'intermédiaire d'un réseau (5) embarqué dans le véhicule notamment un réseau de type bus CAN.

10. Programme d'ordinateur comprenant des instructions de code de programme pour l'exécution des étapes du procédé selon l'une quelconque des revendications 1 à 7 lorsque ledit programme est exécuté par un dispositif de sélection (2) du mode de conduite, par au moins un dispositif de contrôle de la dynamique (3) du véhicule et par au moins un dispositif de contrôle d'ambiance (4) de conduite du véhicule.

11. Véhicule automobile comprenant un système de gestion d'un changement de mode de conduite selon l'une quelconque des revendications 8 et 9.

## Patentansprüche

1. Verfahren zur Verwaltung eines Wechsels eines Fahrmodus eines Kraftfahrzeugs, umfassend die folgenden Schritte:
- Empfangen (25) einer Anfrage in Bezug auf einen Fahrmodus durch wenigstens eine Vorrichtung zur Steuerung der Dynamik (3) des Fahrzeugs und wenigstens eine Fahrambiente-Steuerungsvorrichtung (4) des Fahrzeugs;
- Auswählen (26) von Fahrmoduswechsel-Kriterien (18, 23) je nach der empfangenen Anfrage, die von der wenigstens einen Vorrichtung zur Steuerung der Dynamik (3) des Fahrzeugs und von der wenigstens einen Fahrambiente-Steuerungsvorrichtung (4) vorgenommen wird;
- Bestätigen (27) von Durchführungsbedingungen des Fahrmoduswechsels durch die wenigstens eine Vorrichtung zur Steuerung der Dynamik (3) und Einleiten (30) des Fahrmoduswechsels durch die wenigstens eine Vorrichtung zur Steuerung der Dynamik (3) des Fahrzeugs und die wenigstens eine Fahrambiente-Steuerungsvorrichtung (4),
wobei der Schritt des Bestätigens (27) die folgenden Unterschritte umfasst:
- Kontrollieren (28) der Fähigkeit der wenigstens einen Vorrichtung zur Steuerung der Dynamik (3) des Fahrzeugs, den Fahrmoduswechsel je nach ihrem Betriebszustand vornehmen zu können, und
- Überprüfen (29), dass Stabilitäts- und Komfortbedingungen des Fahrzeugs die Durchführung des Fahrmoduswechsels durch die Vorrichtung zur Steuerung der Dynamik (3) des Fahrzeugs gestatten.

2. Verfahren nach dem vorhergehenden Anspruch, **dadurch gekennzeichnet, dass** die Stabilitätsbedingungen von einer Variation eines Drehmoments des Lenkrads (Va) und von einer Variation eines Lenkwinkels (Vb) des Lenkrads definiert sind.

3. Verfahren nach einem der vorhergehenden Ansprüche, **dadurch gekennzeichnet, dass** ein Unterschritt des Überprüfens (29) vorsieht, dass die wenigstens eine Vorrichtung zur Steuerung der Dynamik (3) des Fahrzeugs geeignet ist, den Fahrmoduswechsel durchzuführen, wenn:
- ein Variationswert eines Lenkraddrehmoments (Va) und eines Lenkwinkelwerts (Vb), die von der wenigstens einen Vorrichtung zur Steuerung der Dynamik (3) bestimmt werden, im Wesentlichen kleiner als ein Variationsschwellenwert des Lenkraddrehmoments bzw. ein Variationsschwellenwert eines Lenkwinkels des Lenkrads sind, und/oder
- ein Summenwert (S) der Wirkungen eines Variationswerts eines Lenkraddrehmoments (Va) und eines Lenkwinkelwerts (Vb) des Lenkrads, der von der wenigstens einen Vorrichtung zur Steuerung der Dynamik (3) bestimmt wird, im Wesentlichen kleiner als ein Variationsschwellenwert des Lenkraddrehmoments und kleiner als ein Variationsschwellenwert eines Lenkwinkels des Lenkrads ist.

4. Verfahren nach einem der vorhergehenden Ansprüche, **dadurch gekennzeichnet, dass** der Schritt des Einleitens (30) einen Einleitungszeitpunkt (t1, t2, t3, t4, t5) des Fahrmoduswechsels vorsieht, der je nach einem Zeitraum (T) bestimmt wird, der ab einem Empfangszeitpunkt (t0) der Fahrmoduswechsel-Anfrage beginnt, die durch die wenigstens eine Vorrichtung zur Steuerung der Dynamik (3) des Fahrzeugs und die wenigstens eine Fahrambiente-Steuerungsvorrichtung (4) des Fahrzeugs empfangen wird.

5. Verfahren nach einem der vorhergehenden Ansprüche, **dadurch gekennzeichnet, dass** der Schritt des Einleitens (30) einen Einleitungszeitpunkt (t1) des Fahrmoduswechsels durch die wenigstens eine Fahrambiente-Steuerungsvorrichtung (4) des Fahrzeugs vorsieht, der im Wesentlichen sofort auf einen Empfangszeitpunkt (t0) der Fahrmoduswechsel-Anfrage folgt.

6. Verfahren nach einem der vorhergehenden Ansprüche, **dadurch gekennzeichnet, dass** der Schritt des Einleitens (30) Folgendes vorsieht:
- ein Einleiten des Fahrmoduswechsels durch mehrere Vorrichtungen zur Steuerung der Dynamik (3) des Fahrzeugs, das sequentiell durchgeführt wird, und/oder
- ein Einleiten des Fahrmoduswechsels durch mehrere Fahrambiente-Steuerungsvorrichtungen (4) des Fahrzeugs, das gleichzeitig durchgeführt wird.

7. Verfahren nach einem der vorhergehenden Ansprüche, **dadurch gekennzeichnet, dass**:
jede Vorrichtung zur Steuerung der Dynamik (3) geeignet ist, die Schritte des Auswählens (26), des Bestätigens (27) und des Einleitens (30) des Fahrmoduswechsels autonom/selbständig durchzuführen, und/oder jede Ambiente-Steuerungsvorrichtung (4) geeignet ist,
die Schritte des Auswählens (26) und des Einleitens (30) des Fahrmoduswechsels des Fahrens des Fahrzeugs autonom/selbständig durchzuführen, und/oder

8. System zur Verwaltung eines Fahrmoduswechsels eines Kraftfahrzeugs für die Durchführung des Verfahrens nach einem der vorhergehenden Ansprüche, umfassend:
- eine Vorrichtung zur Auswahl (2) des Fahrmodus;
- wenigstens eine Vorrichtung zur Steuerung der Dynamik (3) des Fahrzeugs, und
wenigstens eine Fahrambiente-Steuerungsvorrichtung (4) des Fahrzeugs, wobei die Vorrichtung zur Auswahl (2) des Fahrmodus mit der wenigstens einen Vorrichtung zur Steuerung der Dynamik (3) des Fahrzeugs und mit der wenigstens einen Fahrambiente-Steuerungsvorrichtung (4) des Fahrzeugs verbunden ist, wobei die wenigstens eine Vorrichtung zur Steuerung der Dynamik (3) die folgenden Mittel umfasst:
- zum Kontrollieren der Fähigkeit der wenigstens einen Vorrichtung zur Steuerung der Dynamik (3) des Fahrzeugs, den Fahrmoduswechsel je nach ihrem Betriebszustand vornehmen zu können, und
- zum Überprüfen, dass Stabilitäts- und Komfortbedingungen des Fahrzeugs die Durchführung des Fahrmoduswechsels durch die Vorrichtung zur Steuerung der Dynamik (3) des Fahrzeugs gestatten.

9. System nach dem vorhergehenden Anspruch, **dadurch gekennzeichnet, dass**:
- die wenigstens eine Vorrichtung zur Steuerung der Dynamik (3) des Fahrzeugs und die wenigstens eine Fahrambiente-Steuerungsvorrichtung (4) jeweils eine Steuereinheit (15, 19) und eine Funktionseinheit (14, 19) umfassen, und/oder
- eine Steuereinheit (15, 19) der wenigstens einen Vorrichtung zur Steuerung der Dynamik (3) des Fahrzeugs und der wenigstens einen Fahrambiente-Steuerungsvorrichtung (4) Fahrmoduswechsel-Kriterien umfasst, und/oder
- die Vorrichtung zur Auswahl (2) des Fahrmodus mit der wenigstens einen Fahrambiente-Steuerungsvorrichtung (4) und mit der wenigstens einen Vorrichtung zur Steuerung der Dynamik des Fahrzeugs über ein bordeigenes Netzwerk (5) des Fahrzeugs verbunden ist, insbesondere ein Netzwerk vom Typ CAN-Bus.

10. Computerprogramm umfassend Programmcode-Anweisungen für die Ausführung der Schritte des Verfahrens nach einem der Ansprüche 1 bis 7, wenn das Programm von einer Vorrichtung zur Auswahl (2) des Fahrmodus, von wenigstens einer Vorrichtung zur Steuerung der Dynamik (3) des Fahrzeugs und von wenigstens einer Fahrambiente-Steuerungsvorrichtung (4) des Fahrzeugs ausgeführt wird.

11. Kraftfahrzeug umfassend ein System zur Verwaltung eines Fahrmoduswechsels nach einem der Ansprüche 8 und 9.

## Claims

1. Method for managing a change in driving mode of a motor vehicle, comprising the following steps:
- receiving (25) a request relating to a driving mode from at least one vehicle dynamics control device (3) and at least one vehicle driving ambience control device (4);
- selecting (26) criteria (18, 23) for changing the driving mode depending on the said received request that was made by the said at least one vehicle dynamics control device (3) and by the said at least one driving ambience control device (4);
- validating (27) conditions for making the change in driving mode by way of the said at least one dynamics control device (3), and
- initiating (30) the change in driving mode by way of the said at least one vehicle dynamics control device (3) and the said at least one driving ambience control device (4),
the validation step (27) comprising the following substeps:
- controlling (28) the capacity of the said at least one vehicle dynamics control device (3) to be able to make the change in driving mode depending on its operating state, and
- verifying (29) that the conditions of stability and comfort of the vehicle make it possible to implement the change in driving mode by way of the vehicle dynamics control device (3).

2. Method according to the preceding claim, **characterized in that** the stability conditions are defined by a variation of a steering wheel torque (Va) and by a variation of a steering angle (Vb) of the steering wheel.

3. Method according to either one of the preceding claims, **characterized in that** a verification substep (29) provides that the said at least one vehicle dynamics control device (3) is able to implement the change in driving mode if:
- a value for the variation of a steering wheel torque (Va) and a value for the steering angle (Vb) of the steering wheel that were determined by the said at least one dynamics control device (3) are substantially less than a threshold value for the variation of the steering wheel torque and a threshold value for the variation of the steering angle of the steering wheel, respectively, and/or
- a total value (S) summing the effects of a value for the variation of a steering wheel torque (Va) and a value for the steering angle (Vb) of the steering wheel that was determined by the said at least one dynamics control device (3) is substantially less than a threshold value for the variation of the steering wheel torque and less than a threshold value for the variation of a steering angle of the steering wheel.

4. Method according to any one of the preceding claims, **characterized in that** the initiation step (30) provides an initiation time (t1, t2, t3, t4, t5) for the change in driving mode which is determined depending on a duration (T) which starts from a reception time (t0) of the request to change driving mode that was received by the said at least one vehicle dynamics control device (3) and the said at least one vehicle driving ambience control device (4).

5. Method according to any one of the preceding claims, **characterized in that** the initiation step (30) provides an initiation time (t1) of the change in driving mode by way of the said at least one vehicle driving ambience control device (4) which substantially instantaneously follows a reception time (t0) of the request to change driving mode.

6. Method according to any one of the preceding claims, **characterized in that** the initiation step (30) provides:
- initiating the change in driving mode by way of multiple vehicle dynamics control devices (3), which is performed sequentially, and/or
- initiating the change in driving mode by way of multiple vehicle driving ambience control devices (4), which is performed simultaneously.

7. Method according to any one of the preceding claims, **characterized in that**:
- each dynamics control device (3) is able to autonomously/independently implement the selection step (26), the validation step (27) and the initiation step (30) for changing the driving mode, and/or
- each ambience control device (4) is able to autonomously/independently implement the selection step (26) and the initiation step (30) for changing the driving mode for driving the vehicle.

8. System for managing a change in driving mode of a motor vehicle for the implementation of the method according to any one of the preceding claims, the system comprising:
- a driving mode selection device (2);
- at least one vehicle dynamics control device (3), and
- at least one vehicle driving ambience control device (4), the driving mode selection device (2) being connected to the said at least one vehicle dynamics control device (3) and to the said at least one vehicle driving ambience control device (4), the said at least one dynamics control device (3) comprising the following means:
- means for controlling the capacity of the said at least one vehicle dynamics control device (3) to be able to make the change in driving mode depending on its operating state, and
- means for verifying that conditions of stability and comfort of the vehicle make it possible to implement the change in driving mode by way of the vehicle dynamics control device (3).

9. System according to the preceding claim, **characterized in that**:
- the said at least one vehicle dynamics control device (3) and the said at least one driving ambience control device (4) each comprise a command unit (15, 19) and a functional unit (14, 19), and/or
- a command unit (15, 19) for the said at least one vehicle dynamics control device (3) and for the said at least one ambience control device (4) comprises criteria for changing the driving mode, and/or
- the driving mode selection device (2) is connected to the said at least one driving ambience control device (4) and to the said at least one vehicle dynamics control device via a vehicle on-board network (5), notably a network of the CAN bus type.

10. Computer program comprising program code instructions for the execution of the steps of the method according to any one of Claims 1 to 7 when the said program is executed by a driving mode selection device (2), by at least one vehicle dynamics control device (3) and by at least one vehicle driving ambience control device (4).

11. Motor vehicle comprising a system for managing a change in driving mode according to either one of Claims 8 and 9.
